# EUROPEAN PATENT SPECIFICATION

(11) **EP 2 591 040 B1**
(45) Date of publication and mention of the grant of the patent: **14.08.2019**
(21) Application number: 11803877.7
(22) Date of filing: 27.06.2011
(51) Int. Cl.: C08G 63/49, C08G 63/127, C08G 63/20, C08G 63/21

(54) **ALKYD RESIN**
ALKYDHARZ
RÉSINE ALKYDE

(30) Priority: 07.07.2010 SE 1000740
(43) Date of publication of application: 15.05.2013
(73) Proprietor: Perstorp AB, 284 80 Perstorp (SE)
(72) Inventor: PERSSON, Per, S-254 40 Helsingborg (SE); SÖRENSEN, Kent, S-284 35 Perstorp (SE); LUNDMARK, Stefan, S-263 93 Höganäs (SE)
(74) Representative: Hoffmann Eitle
(86) International application number: PCT/SE2011/000123
(87) International publication number: WO 2012/005645

(56) References cited:
- EP-A1- 1 178 065
- EP-A1- 2 199 314
- EP-A2- 0 741 175
- WO-A1-2007/052847
- WO-A1-2009/104780
- WO-A1-2009/135921
- WO-A2-2009/053587
- GB-A- 499 065
- JP-A- 2009 062 465
- JP-A- 2009 263 509
- NL-C- 2 002 382
- US-A- 3 238 161
- US-A1- 2002 193 471
- MOORE, J.A. ET AL.: 'Polyesters Derived from Furan and Tetrahydrofuran Nuclei' MACROMOLECULES vol. 11, no. 3, 1978, pages 568 - 573, XP002413093

## Description

The present invention relates to a novel decorative and/or protective solvent borne or waterborne varnish, paint or enamel characterised in that it comprises an alkyd resin obtained by subjecting a raw material composition comprising (A) at least one polycarboxylic acid component comprising at least one furandicarboxylic acid, (B) at least one polyalcohol component comprising at least one polyalcohol having at least three hydroxyl groups and (C) at least one monocarboxylic acid or a corresponding triglyceride component, to one or more esterification and/or transesterification reactions. Polyalcohol is herein and hereafter defined as any compound having, unless otherwise specified, two or more hydroxyl groups and polycarboxylic acid as any compound having two or more carboxylic groups, or being a corresponding anhydride.

Polyesters are well known in the art and frequently and typically used in a large number of applications, such as putties, lacquers, enamels, gel coats, powder coatings, coil coatings, polyurethane resins and other coating systems, printing inks, synthetic lubricants, plasticisers, fibres, dental materials, adhesives, packagings and moulding compositions comprising for instance poly(alkylene)carboxylates, cosmetics and hygiene products. Alkyd resins are polyesters which have been modified by the addition of for instance fatty acids or corresponding triglycerides.

Alkyd resins have been the workhorse for the coatings industry since the 1940s. The term "alkyd" was coined to define the reaction product of polyalcohols and polycarboxylic acids, in other words, polyesters. However, its definition has been narrowed to include only those polyesters comprising, in addition to polyalcohols and polycarboxylic acids, monobasic acids, usually long-chain fatty acids, or corresponding triglycerides. Oil-based alkyd resins are polyesters which have been modified by addition of saturated or unsaturated fatty acids or corresponding triglycerides and oil-free alkyd resins by addition of saturated monocarboxylic acids. For almost any given coating application, from baking enamels for appliances to flat house paints to clear wood finishes, an alkyd resin can be designed to meet the property requirements. The main reactions involved in alkyd resin synthesis are polycondensations by esterification and ester interchange/transesterification. Alkyd resins are usually referred to by a brief description based on certain classification schemes. From the classification the general properties of the resin become immediately apparent to those having basic skills in the art. Classification is based on the nature of the fatty acid/triglyceride and oil length. Alkyd resins can be broadly classified into drying and non-drying types depending on the ability of their films to dry by air oxidation, so called autoxidative drying. This drying ability is derived from polyunsaturated fatty acids/triglycerides in the resin composition. If drying oils or fatty acids, such as linseed oil, are the sources of the fatty acids for the alkyd, the resin belongs to the drying type and is usually used as the film former of coatings or inks. On the other hand, if the fatty acids come from non-drying oils, such as coconut oil, the resin is a non-drying alkyd. Non-drying alkyds are used either as plasticisers for other film-formers, such as in nitrocellulose lacquers, or are crosslinked through their hydroxyl functional groups to become part of the film-former. For an alkyd resin, the oil length is defined as the weight percent of oil or triglyceride equivalent, or alternatively, as the weight percent of fatty acids in the finished resin. Alkyd resins are typically classified into four classes by oil length: very long over 70%, long 56-70%, medium 46-55% and short below 45%.

WO 2009 053587 A2 describes an alkyd resin that is a cosmetic or pharmaceutical composition but not a solvent borne or waterborne a varnish, paint or enamel. In the alkyd resins described in EP 0 741 175 A2, no furandicarboxylic acid is used as the polycarboxylic acid. EP 2 199 314 A1 describes an alkyd resin but it relates to powder coatings and not to solvent borne or waterborne varnishes, paints or enamels.

The application areas and production methods of alkyd resins are well known in the art and do not require any further and over extensively detailed description. Said products are thoroughly disclosed and discussed in a number of chemicals encyclopaedias and handbooks, such as Kirk-Othmer, Encyclopedia of Chemical Technology and Modern Polyesters, Chemistry and Technology of Polyesters and Copolyesters, ed. by John Scheirs and Timothy E. Long, 2003, John Wiley & Sons Ltd, and Alkyd Resin Technology, Formulating Techniques and Allied Calculations, by T.C. Patton, Interscience Publishers, 1962.

The present invention relates to a novel decorative and/or protective solvent borne or waterborne varnish, paint or enamel characterised in that it comprises an alkyd resin obtained by subjecting a raw material composition comprising (A) at least one polycarboxylic acid component, (B) at least one polyalcohol component and (C) at least one monocarboxylic acid, or corresponding triglyceride, component to one or more esterification and/or transesterification reactions,. wherein said polycarboxylic acid component (A) comprises at least one furandicarboxylic acid, and wherein component (B) comprises at least one compound having at least three hydroxyl groups.

General environmental concerns, such as use of renewable resources rather than crude-oil based chemistries, biodegradable polymers, the pressure to recycle waste materials back into the raw material supply, etc, impact polymer technology. Technologies developed in response to environmental concerns have been emerging and will continue to emerge as new issues supplant existing ones. A furandicarboxylic acid can easily be obtained from renewable resources, such a glucose and fructose derived from for instance starch and hemicellulose.

Said furandicarboxylic acid is in preferred embodiments of the present invention 2,3-, 3,4- or 2,5-furandicarboxylic acid or 2,3-, 3,4- or 2,5-tetrahydrofurandicarboxylic acid.

Embodiments of said polycarboxylic acid component (A) further suitably and preferably comprises at least one additional aliphatic, cycloaliphatic or aromatic polycarboxylic acid or a corresponding anhydride, such as but not limited to o-phthalic acid or anhydride, isophthalic acid, terephthalic acid, 1,2-cyclohexanedicarboxylic acid or anhydride, 1,3-cyclohexanedicarboxylic acid, 1,4-cyclohexandicarboxylic acid, tetrahydrophthalic acid or anhydride, maleic anhydride, fumaric acid, adipic acid, azelaic acid, succinic acid or anhydride, sebacic acid, trimelletic acid or anhydride, itaconic acid, citraconic acid and/or pyromelletic acid or anhydride.

Embodiments of said polyalcohol component (B) suitably and preferably comprises at least one linear or branched aliphatic, cycloaliphatic or aromatic polyalcohol, polyester polyalcohol or polyether polyalcohol, such as but not limited to an alkylene glycol, a poly(alkylene) glycol, a polycarbonate polyol, a di(hydroxyalkyl)furan, a di(hydroxyalkyl)tetrahydrofuran), a 2-alkyl-1,3-propanediol or a dimer, trimer or polymer thereof, a 2,2-dialkyl-1,3-propanediol or a dimer, trimer or polymer thereof, a 2-hydroxyalkyl-1,3-propanediol or a dimer, trimer or polymer thereof, a 2,2-dihydroxyalkyl-1,3-propanediol or a dimer, trimer or polymer thereof, a 2-alkyl-2-hydroxyalkyl-1,3-propanediol or a dimer, trimer or polymer thereof, a dendritic polyester and/or polyether polyalcohol, and/or a polyalkoxylated, such as a polymethoxylated, polyethoxylated and/or polypropoxylated, species of a said polyalcohol. Alkyl is herein preferably C₁-C₁₈, and most preferably C₁-C₈ alkyl.

Said polyalcohol component (B) in preferred embodiments suitably comprises ethylene glycol, 1,2-propanediol, 1,3-propanediol, 1,4-butylene glycol, 1,3-butylene glycol, neopentyl glycol, 2-butyl-2-ethyl-1,3-propanediol, di(hydroxymethyl)furan, di(hydroxymethyl)-tetrahydrofuran, pentaerythritol spiroglycol, isosorbide, isomannide, isoidide, glycerol, di-glycerol, trimethylolethane, trimethylolpropane, trimethylolbutane, di-trimethylolethane, di-trimethylolpropane, di-trimethylolbutane, pentarerythritol, di-pentaerythritol, tripentaerythritol, anhydroennea-heptitol, sorbitol, mannitol, glycerol mono(meth)allyl ether, di-glycerol di(meth)allyl ether, trimethylolethane mono(meth)allyl ether, trimethylolpropane mono(meth)allyl ether, trimethylolbutane mono(meth)allyl ether, pentaerythritol mono(meth)allyl ether, pentaerythritol di(meth)allyl ether, di-trimethylolethane mono(meth)allyl ether, di-trimethylolethane di(meth)allyl ether, di-trimethylolpropane mono(meth)allyl ether, di-trimethylolpropane di(meth)allyl ether, di-trimethylolbutane mono(meth)allyl ether, and/or di-trimethylolbutane di(meth)allyl ether, as well as by polyalkoxylated species of a said polyalcohol.

Said monocarboxylic acid, or corresponding triglyceride, component (C) suitably and preferably comprises abietic acid, benzoic acid, *p*-tert.-butylbenzoic acid, caproic acid, capric acid, castor fatty acid or castor oil, coconut fatty acid or coconut oil, cottonseed fatty acid or cottonseed oil, acrylic acid, methacrylic acid, crotonic acid, iso-crotonic acid, 2-ethylhexanoic acid, 2-propylheptanoic acid, lauric acid, linoleic acid, oleic acid, pelargonic acid, soybean fatty acid or soybean oil, tall oil fatty acid, safflower fatty acid or safflower oil, linseed fatty acid or linseed oil, sunflower fatty acid or sunflower oil, linolenic acid, eleostearic acid, tung oil, poppy seed oil, perilla oil, oiticia oil, fish oil, dehydrated castor oil or fatty acid, almond oil, bassau oil, cocoa butter oil, macadamia oil, olive oil, peanut oil and/or nahar seed oil.

Said raw material composition can, in certain embodiments of the present invention, suitably further comprise at least one hydroxyfunctional carboxylic acid, such as but not limited to dimetylolpropionic acid, dimethylolbutyric acid, trihydroxymethylacetic acid, dihydroxymethylvaleric acid, dihydroxypropionic acid, heptanoic acid, citric acid, tartaric acid, dihydroxymalonic acid, gluconic acid, dihydroxybensoic acid, hydroxyvaleric acid, hydroxypropionic acid and/or hydroxypivalic acid.

Said raw material composition, can in yet further embodiments, suitably further comprise at least one lactone or other inner ether, such as glycolide, valerolactone, propiolactone, caprolactone and/or polycaprolactone.

Said raw material composition can also, in yet further embodiments thereof, suitably further comprise at least one linear or branched aliphatic, cycloaliphatic or aromatic monofunctional alcohol, such as an alkanol having 1-18 carbon atoms, a 5-alkyl-5-hydroxyalkyl-1,3-dioxane and/or a monohydroxy functional (meth)allyl ether. Suitable monoalcohols include, but are not limited to, 2-ethylhexanol, 2-propylheptanol, isononanol, isodecanol, 5-methyl-5-hydroxy- methyl-1,3-dioxane, 5-ethyl-5-hydroxymethyl-1,3-dioxane, glycerol di(meth)allyl ether, trimethylolethane di(meth)allyl ether, trimethylolpropane di(meth)allyl ether, trimethylolbutane di(meth)allyl ether and pentaerythritol tri(meth)allyl ether.

Certain embodiments of said raw material composition, yielding the alkyd resin comprised in the varnish, paint or enamel according to the present invention, can advantageously further comprises an isocyanate component comprising at least one isocyanate or polyisocyanate, such as but not limited to methyl isocyanate, toluene diisocyanate, diphenyl methane diisocyanate, hexamethylene diisocyanate, isophorone diisocyanate, tetramethylxylene diisocyanate, dicyclohexyl methane diisocyanate, furan diisocyanate, tetrahydrofuran diisocyanate, cyclohexylene diisocyanate, xylene diisocyanate, naphthalene diisocyanate, phenylene diisocyanate, nonane triisocyanate and/or triphenyl methane triisocyanate, and/or an epoxy functional component comprising at least one epoxy functional compound, the epoxy functional compound preferably being a glycidyl ester or a glycidyl ether. Suitable epoxy functional compounds can be exemplified by, but not limited to, for instance 1,2-epoxy-3-allyloxypropane, 1-allyloxy-2,3-epoxypropane, 1,2-epoxy-3-phenoxypropane, 1-glycidyloxy-2-ethylhexane, bisphenol A-diglycidyl ether or a reaction product thereof, diglycidyl ether of pentaerythritol spiroglycol, diglycidyl terephthalate, epoxidised soybean fatty acid, epoxidised soybean oil, epoxidised polyvinyl alcohol, epoxidised dehydrated castor oil, epoxidised linseed oil and 3,4-epoxy-cyclohexylmethyl-3,4-epoxycyclohexanecarboxylate.

The alkyd resin comprised in the varnish, paint or enamel of the present invention can furthermore be modified by compounds such as thiols, polythiols, thio acids, polythio acids, amines, polyamines, vinylics, such as styrene and vinyltoluene, silicones, oxetanes and/or hydroxyoxetanes having one or more hydroxyl groups, such as oxetanes of 2-alkyl-1,3-propanediols, 2,2-dialkyl-1,3-propanediols, 2-alkyl-2-hydroxyalkyl-1,3-propanediols, 2,2-dihydroxyalkyl-1,3-propanediols as well as dimers and polymers thereof, wherein alkyl for instance is linear or branched having 1 to 12 carbon atoms.

The alkyd resin can be diluted in organic solvents or emulsified to alkyd emulsions by the addition of external and/or internal emulsifiers.

In a further aspect, the alkyd resin as herein disclosed is used in production of materials and articles, such as decorative and/or protective solvent borne or waterborne varnishes, paints and enamels.

Without further elaboration, it is believed that one skilled in the art can, using the preceding description, utilise the present invention to its fullest extent. The following preferred specific embodiments are, therefore, to be construed as merely illustrative and not limitative of the remainder of the disclosure in any way whatsoever. In the following, Examples 1-5 refer to preparation of alkyd resins according to embodiments of the present invention. Example 6 to evaluation of the drying properties of the alkyd yielded in Example 1. Example 7 refers to preparation of an alkyd emulsion based on the alkyd yielded in Example 5. Example 8 is an evaluation of the alkyd emulsion obtained in Example 7. Enclosed Graph 1 presents drying properties obtained in Example 6.

### Example 1

Step 1: In a 700 ml round bottom glass flask equipped with an agitator, condenser, Dean-Stark separator and inert gas inlet, was charged 1.542 mole of trimethylolpropane (TMP) and 0.320 mole of 2,5-furandicarboxylic acid (FDCA). The mixture was heated to 100°C, and 0.33 g of a tin catalyst (Fascat® 4100) and 33 g of xylene as azeotropic solvent were charged. The temperature was raised to 140°C and 0.454 mole of FDCA was charged to give a molar ratio between TMP and FDCA of 2:1. The temperature was during 200 minutes raised to 180°C. Esterification water began distil off azeotropically at 147°C. The solution became clear when the temperature reached 180°C. The temperature was kept at 180°C for 195 minutes until an acid value of 0.6 mg KOH/g was obtained and 27.5 ml of water had been distilled off Xylene
was evaporated at reduced pressure (10 mm Hg) during 30 minutes. Yielded intermediate product was cooled down.

Step 2: In a 250 ml round bottom glass flask equipped with an agitator, condenser, Dean-Stark separator and inert gas inlet, was charged 54.0 g of the intermediate product from Step 1, 34.4 g of o-phthalic anhydride, 10.9 g of pentaerythritol, 90.0 g of tall oil fatty acid and 6.0 g of xylene. The temperature was raised to 174°C during 50 minutes. Esterification water began to distilled off azeotropically and the reaction mixture became clear. The temperature was increased to 243°C and kept during 4.7 hours. Yielded alkyd resin was, when an acid number of less than 15 mg KOH/g was reached, cooled and diluted in white spirit.

**Yielded alkyd exhibited following properties:**

| | |
|---|---|
| Oil length as triglyceride, %: | 52.1 |
| Solid content, %: | 47.4 |
| Viscosity at 23°C, mPas: | 6000 |
| Acid value, mg KOH/g: | 13.6 |
| Hydroxyl value, mg KOH/g: | 44 |

### Example 2

In a 500 ml round bottom glass flask equipped with an agitator, condenser, Dean-Stark separator and inert gas inlet, was charged 20.0 g of pentaerythritol, 114.8 g of tall oil fatty acid, 28.6 g of trimethylolpropane and 6.0 g of xylene as azeotropic solvent. The temperature was during 90 minutes raised to reflux at 165°C. The temperature was during 120 minutes increased to 240°C and kept at 240°C until an acid number of less than 2 mg KOH/g was reached. The temperature was reduced to 175°C and 43.6 g of 2,5-furandicarboxylic acid was charged. The temperature was now during 110 minutes raised to 240°C and kept until an acid number of less than 10 mg KOH/g was reached.

**Yielded alkyd exhibited following properties:**

| | |
|---|---|
| Oil length as triglyceride, %: | 63 |
| Acid value, mg KOH/g: | 9.8 |
| Hydroxyl value, mg KOH/g: | 89 |
| Molecular weight, Mₙ, g/mol | 4000 |

### Example 3

Step 1: In a 700 ml round bottom flask equipped with an agitator, condenser, Dean-Stark separator and inert gas inlet, was charged 57.73 g of trimethylolpropane (TMP) and 12.63 g of 2,5-furandicarboxylic acid (FDCA). The mixture was heated to 100°C and 0.08 g of a tin catalyst (Fascat®) 4100) and 10 g of xylene as azeotropic solvent were charged. The temperature was raised to 140°C and 20.96 g of FDCA was charged. The temperature was raised during 200 minutes to 180°C. Esterification water began to distil off azeotropically at 147°C. The solution became clear when the temperature reached 180°C. The temperature was kept at 180°C for 195 minutes until an acid value of 0.6 mg KOH/g was obtained.

Step 2: 27.57 g of dehydrated castor oil fatty acid, 50.58 g of tall oil fatty acid, 15.20 g of pentaerythritol, 20.35 g of benzoic acid and 8 g of xylene as azeotropic solvent were at 130°C charged to the intermediate product from step 1. The temperature was during 4 hours raised to 220°C and kept at this temperature until an acid number of 9 mg KOH/g was reached by keeping a good reflux. The reactor was cooled to 70°C.

Step 3: 30.73 g of succinic anhydride was charged to the intermediate product from step 2. The temperature was slowly raised to 185°C and kept at this temperature until an acid number of 10 mg KOH/g was reached. The alkyd was finally cooled and diluted in xylene.

**Yielded alkyd exhibited following properties:**

| | |
|---|---|
| Oil length as triglyceride, %: | 39.5 |
| Acid number, mg KOH/g: | 9.7 |
| Hydroxyl number, mg KOH/g: | 61 |

### Example 4

Step 1: In a 700 ml round bottom flask equipped with an agitator, condenser, Dean-Stark separator and inert gas inlet, was charged 110.73 g of trimethylolpropane (TMP) and 25.75 g of 2,5-furandicarboxylic acid (FDCA). The mixture was heated to 100°C and 1.09 g of a tin catalyst (Fascat®) 4100) and 10 g of xylene as azeotropic solvent were charged. The temperature was raised to 140°C and 38.63 g of FDCA was charged. The temperature was raised during 200 minutes to 180°C. Esterification water began to distil off azeotropically at 147°C. The solution became clear when the temperature reached 180°C. The temperature was kept at 180°C for 195 minutes until an acid value of 0.8 mg KOH/g was obtained.

Step 2: 93.48 g of coconut fatty acid, 13.38 g of pentaerythritol and 10 g xylene as azeotropic solvent were at 130°C charged to the intermediate product from step 1. The temperature was during 4 hours raised to 210°C and kept at this temperature until an acid number of 10 mg KOH/g was reached by keeping good reflux. The reactor was cooled to 70°C.

Step 3. 48.45 g of succinic anhydride was charged to the intermediate from step 2. The temperature was slowly raised to 185°C and kept at this temperature until an acid number of 10 mg KOH/g was reached. The alkyd was finally cooled and diluted in xylene.

**Yielded alkyd exhibited following properties:**

| | |
|---|---|
| Oil length as triglyceride, %: | 33 |
| Acid number, mg KOH/g: | 9.5 |
| Hydroxyl number, mg KOH/g: | 125 |

### Example 5

Step 1: In a round bottom glass flask equipped with an agitator, condenser, Dean-Stark separator and inert gas inlet, was charged 344.8 g of trimethylolpropane (TMP) and 83.3 g of 2,5-furandicarboxylic acid (FDCA). The mixture was heated to 100°C, and 0.5 g of a tin catalyst (Fascat® 4100) and 50 g of xylene as azeotropic solvent were charged. The temperature was raised to 140°C and 118.2 g of FDCA was charged. The temperature was during 200 minutes raised to 180°C. Esterification water began distil off azeotropically at 147°C. The solution became clear when the temperature reached 180°C. The temperature was kept at 180°C until an acid value of 1.2 mg KOH/g was obtained and 46.3 g of water had been distilled off. Xylene was evaporated at reduced pressure (10 mm Hg) during 30 minutes. Yielded intermediate product was cooled down.

Step 2: In a round bottom glass flask equipped with an agitator, condenser, Dean-Stark separator and inert gas inlet, was charged 299.0 g of the intermediate product from Step 1, 190.4 g of o-phthalic anhydride, 60.3 g of pentaerythritol, 498.3 g of tall oil fatty acid and 30.0 g of xylene. The temperature was raised to 174°C during 50 minutes. Esterification water began to distil off azeotropically and the reaction mixture became clear. The temperature was increased to 220°C during 170 hours. The reaction was continued until the yielded alkyd resin had an acid number of 20-22 mg KOH/g, after which xylene was evaporated at reduced pressure and the alkyd resin was cooled.

**Yielded alkyd exhibited following properties:**

| | |
|---|---|
| Solid content, %: | 98.5 |
| Viscosity at 125 °C, mPas: | 820 |
| Acid value, mg KOH/g: | 19 |
| Hydroxyl value, mg KOH/g: | 56 |

### Example 6

Metal driers were added to 100 g of the alkyd yielded in Example 1 in following amounts:
0.25 g of Zr 12%,
0.10 g of Ca 10%, and
0.06 g of Co 6%.

The clear lacquer was applied on a glass panels with a dry film thickness of 30 µm and the drying was at 23°C and 50 % relative humidity recorded by means of a Konig Pendulum and measured as Konig secs. The result is given in Graph 1 below.

### Example 7

The alkyd obtained in Example 5 was heated to 50°C and to 50 parts per weight of the alkyd, 1.6 parts per weight of an anionic surfactant (Zephrym®) 3300 B), 3.2 parts per weight of an non-ionic surfactant (Atlas G 5000) and 0.5 parts per weight of a defoamer (BYK ®) 028) were charged at a temperature of 50°C and the mixture was allowed to homogenise at low shear followed by slowly addition (2 ml/min) of 44.5 parts per weight of water to a solid content of 51% after which the emulsion was allowed to cool to room temperature while stirring.

**Yielded emulsion had the following properties:**

| | |
|---|---|
| Solid content, %: | 51 |
| Viscosity at 23 °C, mPas: | 70 |
| Particle size (µm) | 0.3 |

### Example 8

0.5% by weight, calculated on 100% alkyd, of the metal drier Additol® VXW 6206 (combined Co, Li and Zr drier, Cytec-Liquid Coating Resins & Additives) was added to and mixed into the emulsion obtained in Example 7. Films were coated onto glass panels at a dry film thickness of 35µm. The visual appearance of the films were even and the films were glossy. The films were dust free after 1 hour, tack free after 2 hours and through dry after 14 hours, as measured on a Beck-Koller drying recorder.

## Claims

1. A decorative and/or protective solvent borne or waterborne varnish, paint or enamel **characterised in that** it comprises an alkyd resin obtained by subjecting a raw material composition comprising
(A) at least one polycarboxylic acid component comprising at least one furandicarboxylic acid,
(B) at least one polyalcohol component comprising at least one polyalcohol having at least three hydroxyl groups and
(C) at least one monocarboxylic acid or corresponding triglyceride component to one or more esterification and/or transesterification reactions.

2. A decorative and/or protective solvent borne or waterborne varnish, paint or enamel according to Claim 1 **characterised in that** said furandicarboxylic acid is 2,3-furandicarboxylic acid, 3,4-furandicarboxylic acid, 2,5-furandicarboxylic acid, 2,3-tetrahydrofurandicarboxylic acid, 3,4-tetrahydrofurandicarboxylic acid or 2,5-tetrahydrofurandicarboxylic acid.

3. A decorative and/or protective solvent borne or waterborne varnish, paint or enamel according to Claim 1 or 2 **characterised in that** said polycarboxylic acid component (A) further comprises at least one additional aliphatic, cycloaliphatic or aromatic polycarboxylic acid or a corresponding anhydride.

4. A decorative and/or protective solvent borne or waterborne varnish, paint or enamel according to Claim 3 **characterised in, that** said additional polycarboxylic acid or corresponding anhydride is o-phthalic acid or anhydride, isophthalic acid, terephthalic acid, 1,2-cyclohexanedicarboxylic acid or anhydride, 1,3-cyclohexanedicarboxylic acid, 1,4-cyclohexandicarboxylic acid, tetrahydrophthalic acid or anhydride, maleic anhydride, fumaric acid, adipic acid, azelaic acid, succinic acid or anhydride, sebacic acid, trimelletic acid or anhydride, itaconic acid, citraconic acid and/or pyromelletic acid or anhydride.

5. A decorative and/or protective solvent borne or waterborne varnish, paint or enamel according to any of the Claims 1-4 **characterised in that** said polyalcohol component (B) comprises at least one linear or branched aliphatic, cycloaliphatic or aromatic polyalcohol, polyester polyalcohol or polyether polyalcohol.

6. A decorative and/or protective solvent borne or waterborne varnish, paint or enamel according to any of the claims 1-5 **characterised in that** said polyalcohol component (B) comprises at least one alkylene glycol, poly(alkylene) glycol, a di(hydroxyalkyl)furan, a di(hydroxyalkyl)tetrahydrofuran), a 2-alkyl-1,3-propanediol, 2,2-dialkyl-1,3-propanediol, 2-hydroxyalkyl-1,3-propanediol, 2,2-dihydroxyalkyl-1,3-propanediol, 2-alkyl-2-hydroxyalkyl-1,3-propanediol, dendritic polyester and/or polyether polyalcohol, and/or at least one polyalkoxylated species of a said polyalcohol.

7. A decorative and/or protective solvent borne or waterborne varnish, paint or enamel according to any of the claims 1-6 **characterised in that** said polyalcohol component (B) comprises ethylene glycol, 1,2-propanediol, 1,3-propanediol, 1,4-butylene glycol, 1,3-butylene glycol, neopentyl glycol, 2-butyl-2-ethyl-1,3-propanediol, a di(hydroxymethyl)furan, di(hydroxymethyl)tetrahydrofuran, pentaerythritol spiroglycol, glycerol, di-glycerol, trimethylolethane, trimethylolpropane, trimethylolbutane, di-trimethylolethane, di-trimethylolpropane, di-trimethylolbutane, pentarerythritol, di-pentaerythritol, tripentaerythritol, anhydroennea-heptitol, sorbitol, mannitol, glycerol mono(meth)allyl ether, di-glycerol di(meth)allyl ether, trimethylolethane mono(meth)allyl ether, trimethylolpropane mono(meth)allyl ether, trimethylolbutane mono(meth)allyl ether, pentaerythritol mono(meth)allyl ether, pentaerythritol di(meth)allyl ether, di-trimethylolethane mono(meth)allyl ether, di-trimethylolethane di(meth)allyl ether, di-trimethylolpropane mono(meth)allyl ether, di-trimethylolpropane di(meth)allyl ether, di-trimethylolbutane mono(meth)allyl ether and/or di-trimethylolbutane di(meth)allyl ether and/or at least one polyalkoxylated species of a said polyalcohol.

8. A decorative and/or protective solvent borne or waterborne varnish, paint or enamel according to Claim 6 or 7 **characterised in that** said polyalkoxylated is polymethoxylated, polyethoxylated and/or polypropoxylated.

9. A decorative and/or protective solvent borne or waterborne varnish, paint or enamel according to any of the Claims 1-8 **characterised in that** said monocarboxylic acid or corresponding triglyceride component (C) comprises abietic acid, benzoic acid, *p*-tert.-butylbenzoic acid, caproic acid capric acid, castor fatty acid or castor oil, coconut fatty acid or coconut oil, cottonseed fatty acid or cottonseed oil, acrylic acid, methacrylic acid, crotonic acid, iso-crotonic acid, 2-ethylhexanoic acid, 2-propylheptanoic acid, lauric acid, linoleic acid, oleic acid, pelargonic acid or pelargonic oil, soybean fatty acid or soybean oil, tall oil fatty acid, safflower fatty acid or safflower oil, linseed fatty acid or linseed oil, sunflower fatty acid or sunflower oil, linolenic acid, eleostearic acid, tung oil, poppy seed oil, perilla oil, oiticia oil, fish oil, dehydrated castor oil or dehydrated castor fatty acid, almond oil, bassau oil, cocoa butter, macadamia oil, olive oil, peanut oil and/or nahar seed oil.

10. A decorative and/or protective solvent borne or waterborne varnish, paint or enamel according to any of the Claims 1-9 **characterised in that** said raw material composition further comprises:
- at least one hydroxyfunctional carboxylic acid, such as dimethylolpropionic acid, dimethylolbutyric acid, trihydroxymethylacetic acid, dihydroxymethylvaleric acid, dihydroxypropionic acid, heptanoic acid, citric acid, tartaric acid, dihydroxymalonic acid, gluconic acid, dihydroxybenzoic acid, hydroxyvaleric acid, hydroxypropionic acid and/or hydroxypivalic acid,
- at least one lactone or other inner ether, such as glycolide, valerolactone, propiolactone, caprolactone and/or polycaprolactone,
- at least one linear or branched aliphatic, cycloaliphatic or aromatic monofunctional alcohol, such as an alkanol having 1-18 carbon atoms, and/or
- at least one isocyanate functional and/or at least one epoxy functional component.

11. A decorative and/or protective solvent borne or waterborne varnish, paint or enamel according to Claim 10 **characterised in that** said monofunctional alcohol is 2-ethylhexanol, 2-propylheptanol, isononanol, isodecanol, 5-methyl-5-hydroxymethyl-1,3-dioxane, 5-ethyl-5-hydroxymethyl-1,3-dioxane, glycerol di(meth)allyl ether, trimethylolethane di(meth)allyl ether, trimethylolpropane di(meth)allyl ether, trimethylolbutane di(meth)allyl ether and/or pentaerythritol tri(meth)allyl ether.

## Patentansprüche

1. Dekorativer und/oder protektiver Lack, Farbe oder Email auf Lösungsmittelbasis oder Wasserbasis, **dadurch gekennzeichnet, dass** dieser/diese/dieses ein Alkydharz umfasst, erhalten durch Unterwerfen einer Ausgangsmaterialzusammensetzung, umfassend
(A) mindestens eine Polycarbonsäurencomponente, umfassend mindestens eine Furandicarbonsäure,
(B) mindestens eine Polyalkoholkomponente, umfassend mindestens einen Polyalkohol mit mindestens drei Hydroxylgruppen, und
(C) mindestens eine Monocarbonsäure oder entsprechende Triglyceridkomponente,
einer oder mehreren Veresterungs- und/oder Umesterungsreaktionen.

2. Dekorativer und/oder protektiver Lack, Farbe oder Email auf Lösungsmittelbasis oder Wasserbasis gemäß Anspruch 1, **dadurch gekennzeichnet, dass** die Furandicarbonsäure 2,3-Furandicarbonsäure, 3,4-Furandicarbonsäure, 2,5-Furandicarbonsäure, 2,3-Tetrahydrofurandicarbonsäure, 3,4-Tetrahydrofurandicarbonsäure oder 2,5-Tetrahydrofurandicarbonsäure umfasst.

3. Dekorativer und/oder protektiver Lack, Farbe oder Email auf Lösungsmittelbasis oder Wasserbasis gemäß Anspruch 1 oder 2, **dadurch gekennzeichnet, dass** die Polycarbonsäurekomponente (A) weiterhin mindestens eine zusätzliche aliphatische, cycloaliphatische oder aromatischer Polycarbonsäure oder ein entsprechendes Anhydrid umfasst.

4. Dekorativer und/oder protektiver Lack, Farbe oder Email auf Lösungsmittelbasis oder Wasserbasis gemäß Anspruch 3, **dadurch gekennzeichnet, dass** die zusätzliche Polycarbonsäure oder das entsprechende Anhydrid o-Phthalsäure oder -anhydrid, Isophthalsäure, Tetraphthalsäure, 1,2-Cyclohexandicarbonsäure oder
- anhydrid, 1,3-Cyclohexandicarbonsäure, 1,4-Cyclohexandicarbonsäure, Tetrahydrophthalsäure oder
- anhydrid, Maleinanhydrid, Ameisensäure, Adipinsäure, Azelainsäure, Bernsteinsäure oder -anhydrid, Sebacinsäure, Trimellitsäure oder -anhydrid, Itakonsäure, Citraconsäure und/oder Pyromellitsäure oder
- anhyrid ist.

5. Dekorativer und/oder protektiver Lack, Farbe oder Email auf Lösungsmittelbasis oder Wasserbasis gemäß einem der Ansprüche 1 bis 4, **dadurch gekennzeichnet, dass** die Polyalkoholkomponente (B) mindestens einen linearen oder verzweigten aliphatischen, cycloaliphatischen oder aromatischen Polyalkohol, Polyesterpolyalkohol oder Polyetherpolyalkohol umfasst.

6. Dekorativer und/oder protektiver Lack, Farbe oder Email auf Lösungsmittelbasis oder Wasserbasis gemäß einem der Ansprüche 1 bis 5, **dadurch gekennzeichnet, dass** die Polyalkoholkomponente (B) mindestens ein Alkylenglycol, Poly(alkylen)glycol, ein Di(hydroxyalkyl)furan, ein Di(hydroxyalkyl)tetrahydrofuran), ein 2-Alkyl-1,3-propandiol, 2,2-Dialkyl-1,3-propandiol, 2-Hydroxyalkyl-1,3-propandiol, 2,2-Dihydroxyalkyl-1,3-propandiol, 2-Alkyl-2-hydroxyalkyl-1,3-propandiol, dendritischen Polyester- und/oder Polyetherpolyalkohol und/oder mindestens eine polyalkoxylierte Spezies eines genannten Polyalkohols umfasst.

7. Dekorativer und/oder protektiver Lack, Farbe oder Email auf Lösungsmittelbasis oder Wasserbasis gemäß einem der Ansprüche 1 bis 6, **dadurch gekennzeichnet, dass** die Polyalkoholkomponente (B) Ethylenglycol, 1,2-Propandiol, 1,3-Propandiol, 1,4-Butylenglycol, 1,3-Butylenglycol, Neopentylglycol, 2-Butyl-2-ethyl-1,3-propandiol, ein Di(hydroxymethyl)furan, Di(hydroxymethyl)tetrahydrofuran, Pentaerythritolspiroglycol, Glycerin, Diglycerin, Trimethylolethan, Trimethylolpropan, Trimethylolbutan, Ditrimethylolethan, Ditrimethylolpropan, Ditrimethylolbutan, Pentaerythritol, Dipentaerythritol, Tripentaerythritol, wasserfreies Heptitol, Sorbitol, Mannitol, Glycerinmono(meth)allylether, Diglyceroldi(meth)allylether, Trimethylolethanmono(meth)allylether, Trimethylolpropanmono(meth)allylether, Trimethylolbutanmono(meth)allylether, Pentraerythritolmono(meth)allylether, Pentraerythritoldi(meth)allylether, Ditrimethylolethanmono(meth)allylether, Ditrimethylolethandi(meth)allylether, Ditrimethylolpropanmono(meth)allylether, Ditrimethyololpropandi(meth)allylether, Ditrimethyololbutanmono(meth)allylether und/oder Ditrimethylolbutandi(meth)allylether und/oder mindestens eine polyalkoxylierte Spezies eines genannten Polyalkohols umfasst.

8. Dekorativer und/oder protektiver Lack, Farbe oder Email auf Lösungsmittelbasis oder Wasserbasis gemäß Anspruch 6 oder 7, **dadurch gekennzeichnet, dass** der Begriff "polyalkoxyliert" polymethoxyliert, polyethoxyliert und/oder polypropoxyliert ist.

9. Dekorativer und/oder protektiver Lack, Farbe oder Email auf Lösungsmittelbasis oder Wasserbasis gemäß einem der Ansprüche 1 bis 8, **dadurch gekennzeichnet, dass** die Monocarbonsäure oder die entsprechende Triglyceridkomponente (C) Abietinsäure, Benzoesäure, p-tert-Butylbenzoesäure, Capronsäurecapronsäure, Rizinusfettsäure oder Rizinusöl, Kokosnussfettsäure oder Kokosnussöl, Baumwollsamenfettsäure oder Baumwollsamenöl, Acrylsäure, Methacrylsäure, Crotonsäure, Isocorotonsäure, 2-Ethylhexansäure, 2-Propylheptansäure, Laurinsäure, Linolsäure, Oleinsäure, Pelargoninsäure oder Pelargoninöl, Sojanfettsäure oder Sojaöl, Tallölfettsäure, Distelfettsäure oder Distelöl, Leinsamenfettsäure oder Leinöl, Sonnenblumenfettsäure oder Sonnenblumenöl, Linolensäure, Eleosterinsäure, Tungöl, Mohnöl, Perillaöl, Oiticiaöl, Fischöl, dehydriertes Rizinusöl oder dehydrierte Rizinusfettsäure, Mandelöl, Bassau-Öl, Kakaobutter, Makadamiaöl, Olivenöl, Erdnussöl und/oder Naharsamenöl umfasst.

10. Dekorativer und/oder protektiver Lack, Farbe oder Email auf Lösungsmittelbasis oder Wasserbasis gemäß einem der Ansprüche 1 bis 9, **dadurch gekennzeichnet, dass** die Ausgangsmaterialzusammensetzung weiterhin umfasst:
- mindestens eine Hydroxy-funktionalisierte Carbonsäure, wie etwa Dimethylolpropionsäure, Dimethylolbuttersäure, Trihydroxymethylessigäsure, Dihydroxymethylvalerinsäure, Dihydroxypropionsäure, Heptansäure, Zitronensäure, Weinsäure, Dihydroxymalonsäure, Gluconsäure, Dihydroxybenzoesäure, Hydroxyalerinsäure, Hydroxypropionsäure und/oder Hydroxypivalinsäure,
- mindestens ein Lacton oder ein anderer innerer Ether, wie etwa Glycolid, Valerolacton, Propiolacton, Caprolacton und/oder Polycaprolacton,
- mindestens einen linearen oder verzweigten aliphatischen, cycloaliphatischen oder aromatischen monofunktionellen Alkohol, wie etwa einen Alkanol mit 1 bis 18 Kohlenstoffatomen, und/oder
- mindestens eine Isocyanat-funktionalisierte und/oder mindestens eine Epoxy-funktionalisierte Komponente.

11. Dekorativer und/oder protektiver Lack, Farbe oder Email auf Lösungsmittelbasis oder Wasserbasis gemäß Anspruch 10, **dadurch gekennzeichnet, dass** der monofunktionelle Alkohol 2-Ethylhexanol, 2-Propylheptanol, Isononanol, Isodecanol, 5-Methyl-5-hydroxymethyl-1,3-dioxan,5-Ethyl-5-hydroxymethyl-1,3-dioxan, Glycerindi(meth)allylether, Trimethylolethandi(meth)allylether, Trimethylolpropandi(meth)allylether, Trimethylolbutandi(meth)allylether und/oder Pentaerythritoltri(meth)allylether ist.

## Revendications

1. Vernis, peinture ou émail décoratif et/ou protecteur en phase solvant ou en phase aqueuse **caractérisé en ce qu'**il comprend une résine alkyde obtenue par soumission d'une composition de matières premières comprenant
(A) au moins un composant acide polycarboxylique comprenant au moins un acide furanedicarboxylique,
(B) au moins un composant polyalcool comprenant au moins un polyalcool ayant au moins trois groupes hydroxyle et
(C) au moins un composant acide monocarboxylique ou triglycéride correspondant
à une ou plusieurs réactions d'estérification et/ou de transestérification.

2. Vernis, peinture ou émail décoratif et/ou protecteur en phase solvant ou en phase aqueuse selon la revendication 1, **caractérisé en ce que** ledit acide furanedicarboxylique est l'acide 2,3-furanedicarboxylique, l'acide 3,4-furanedicarboxylique, l'acide 2,5-furanedicarboxylique, l'acide 2,3-tétrahydrofuranedicarboxylique, l'acide 3,4-tétrahydrofuranedicarboxylique ou l'acide 2,5-tétrahydrofuranedicarboxylique.

3. Vernis, peinture ou émail décoratif et/ou protecteur en phase solvant ou en phase aqueuse selon la revendication 1 ou 2 **caractérisé en ce que** ledit composant acide polycarboxylique (A) comprend en outre au moins un acide polycarboxylique aliphatique, cycloaliphatique ou aromatique supplémentaire ou un anhydride correspondant.

4. Vernis, peinture ou émail décoratif et/ou protecteur en phase solvant ou en phase aqueuse selon la revendication 3 **caractérisé en ce que** ledit acide polycarboxylique supplémentaire ou anhydride correspondant est l'acide *o*-phtalique ou son anhydride, l'acide isophtalique, l'acide téréphtalique, l'acide 1,2-cyclohexanedicarboxylique ou son anhydride, l'acide 1,3-cyclohexanedicarboxylique, l'acide 1,4-cyclohexanedicarboxylique, l'acide tétrahydrophtalique ou son anhydride, l'anhydride maléique, l'acide fumarique, l'acide adipique, l'acide azélaïque, l'acide succinique ou son anhydride, l'acide sébacique, l'acide triméllitique ou son anhydride, l'acide itaconique, l'acide citraconique et/ou l'acide pyromellitique ou son anhydride.

5. Vernis, peinture ou émail décoratif et/ou protecteur en phase solvant ou en phase aqueuse selon l'une quelconque des revendications 1 à 4 **caractérisé en ce que** ledit composant polyalcool (B) comprend au moins un polyester polyalcool, polyéther polyalcool ou polyalcool aliphatique, cycloaliphatique ou aromatique linéaire ou ramifié.

6. Vernis, peinture ou émail décoratif et/ou protecteur en phase solvant ou en phase aqueuse selon l'une quelconque des revendications 1 à 5 **caractérisé en ce que** ledit composant polyalcool (B) comprend au moins un alkylène glycol, un poly(alkylène) glycol, un di(hydroxyalkyl)furane, un di(hydroxyalkyl)tétrahydrofurane), un 2-alkyl-1,3-propanediol, un 2,2-dialkyl-1,3-propanediol, un 2-hydroxyalkyl-1,3-propanediol, un 2,2-dihydroxyalkyl-1,3-propanediol, un 2-alkyl-2-hydroxyalkyl-1,3-propanediol, un polyester et/ou polyéther polyalcool dendritique, et/ou au moins une espèce polyalcoxylée dudit polyalcool.

7. Vernis, peinture ou émail décoratif et/ou protecteur en phase solvant ou en phase aqueuse selon l'une quelconque des revendications 1 à 6 **caractérisé en ce que** ledit composant polyalcool (B) comprend l'éthylène glycol, le 1,2-propanediol, le 1,3-propanediol, le 1,4-butylène glycol, le 1,3-butylène glycol, le néopentyl glycol, le 2-butyl-2-éthyl-1,3-propanediol, un di(hydroxyméthyl)furane, un di(hydroxyméthyl)tétrahydrofurane, le pentaérythritol spiroglycol, le glycérol, le di-glycérol, le triméthyloléthane, le triméthylolpropane, le triméthylolbutane, le di-triméthyloléthane, le di-triméthylolpropane, le di-triméthylolbutane, le pentarérythritol, le di-pentaérythritol, le tri-pentaérythritol, l'anhydroennea-heptitol, le sorbitol, le mannitol, l'éther mono(méth)allylique de glycérol, l'éther di(méth)allylique de di-glycérol, l'éther mono(méth)allylique de triméthyloléthane, l'éther mono(méth)allylique de triméthylolpropane, l'éther mono(méth)allylique de triméthylolbutane, l'éther mono(méth)allylique de pentaérythritol, l'éther di(méth)allylique de pentaérythritol, l'éther mono(méth)allylique de di-triméthyloléthane, l'éther di(méth)allylique de di-triméthyloléthane, l'éther mono(méth)allylique de di-triméthylolpropane, l'éther di(méth)allylique de di-triméthylolpropane, l'éther mono(méth)allylique de di-triméthylolbutane et/ou l'éther di(méth)allylique de di-triméthylolbutane et/ou au moins une espèce polyalcoxylée dudit polyalcool.

8. Vernis, peinture ou émail décoratif et/ou protecteur en phase solvant ou en phase aqueuse selon la revendication 6 ou 7 **caractérisé en ce que** ladite espèce polyalcoxylée est polyméthoxylée, polyéthoxylée et/ou polypropoxylée.

9. Vernis, peinture ou émail décoratif et/ou protecteur en phase solvant ou en phase aqueuse selon l'une quelconque des revendications 1 à 8 **caractérisé en ce que** ledit composant acide monocarboxylique ou triglycéride correspondant (C) comprend l'acide abiétique, l'acide benzoïque, l'acide *p*-tert-butylbenzoïque, l'acide caproïque, l'acide caprique, l'acide gras de ricin ou l'huile de ricin, l'acide gras de coco ou l'huile de coco, l'acide gras de coton ou l'huile de coton, l'acide acrylique, l'acide méthacrylique, l'acide crotonique, l'acide iso-crotonique, l'acide 2-éthylhexanoïque, l'acide 2-propylheptanoïque, l'acide laurique, l'acide linoléique, l'acide oléique, l'acide pélargonique ou l'huile pélargonique, l'acide gras de soja ou l'huile de soja, l'acide gras de tallöl, l'acide gras de carthame ou l'huile de carthame, l'acide gras de lin ou l'huile de lin, l'acide gras de tournesol ou l'huile de tournesol, l'acide linolénique, l'acide éléostéarique, l'huile de bois de Chine, l'huile d'oeillette, l'huile de périlla, l'huile d'oiticica, l'huile de poisson, l'huile de ricin déshydratée ou l'acide gras de ricin déshydraté, l'huile d'amande, l'huile de babassu, le beurre de cacao, l'huile de macadamia, l'huile d'olive, l'huile d'arachide et/ou l'huile de nahar.

10. Vernis, peinture ou émail décoratif et/ou protecteur en phase solvant ou en phase aqueuse selon l'une quelconque des revendications 1 à 9 **caractérisé en ce que** ladite composition de matières premières comprend en outre :
- au moins un acide carboxylique hydroxyfonctionnel, tel que l'acide dimétylolpropionique, l'acide diméthylolbutyrique, l'acide trihydroxyméthylacétique, l'acide dihydroxyméthylvalérique, l'acide dihydroxypropionique, l'acide heptanoïque, l'acide citrique, l'acide tartrique, l'acide dihydroxymalonique, l'acide gluconique, l'acide dihydroxybenzoïque, l'acide hydroxyvalérique, l'acide hydroxypropionique et/ou l'acide hydroxypivalique,
- au moins une lactone ou autre éther interne, tel que le glycolide, la valérolactone, la propiolactone, la caprolactone et/ou la polycaprolactone,
- au moins un alcool monofonctionnel aliphatique, cycloaliphatique ou aromatique linéaire ou ramifié, tel qu'un alcanol ayant de 1 à 18 atomes de carbone, et/ou
- au moins un composant à fonction isocyanate et/ou au moins un à fonction époxy.

11. Vernis, peinture ou émail décoratif et/ou protecteur en phase solvant ou en phase aqueuse selon la revendication 10 **caractérisé en ce que** ledit alcool monofonctionnel est le 2-éthylhexanol, le 2-propylheptanol, l'isononanol, l'isodécanol, le 5-méthyl-5-hydroxyméthyl-1,3-dioxane, le 5-éthyl-5-hydroxyméthyl-1,3-dioxane, l'éther di(méth)allylique de glycérol, l'éther di(méth)allylique de triméthyloléthane, l'éther di(méth)allylique de triméthylolpropane, l'éther di(méth)allylique de triméthylolbutane et/ou l'éther tri(méth)allylique de pentaérythritol.
